# FASCICULE DE BREVET EUROPEEN

(11) **EP 1 216 380 B1**
(45) Date de publication et mention de la délivrance du brevet: **23.07.2008**
(21) Numéro de dépôt: 00964378.4
(22) Date de dépôt: 27.09.2000
(51) Int. Cl.: F17D 3/01

(54) **PROCEDE ET DISPOSITIF POUR LA DETECTION D'UN DEPOT DANS UN CONDUIT**
VERFAHREN UND VORRICHTING ZUM DETEKTIEREN EINES STOPFENS IN EINEM ROHR
METHOD AND DEVICE FOR DETECTING DEPOSIT IN A CONDUIT

(30) Priorité: 01.10.1999 FR 9912531
(43) Date de publication de la demande: 26.06.2002
(73) Titulaire: Institut Français du Pétrole, 92852 Rueil-Malmaison Cedex (FR); CYBERNETIX, 13382 Marseille Cedex 13 (FR)
(72) Inventeur: ROMANET, Thierry, F-13821 La Penne s/Huveaume (FR); VOLLE, Jean-Luc, F-31600 Eaunes (FR); REBER, Jean, Daniel, F-84120 Pertuis (FR)
(86) Numéro de dépôt international: PCT/FR2000/002670
(87) Numéro de publication internationale: WO 2001/025680

(56) Documents cités:
- DE-A- 4 335 332
- FR-A- 2 754 898
- US-A- 5 836 693

## Description

### DOMAINE TECHNIQUE :

La présente invention a pour objet le domaine de la détection d'un dépôt de paraffine susceptible de se former dans une canalisation de transport d'un fluide pétrolier.

Une application de l'invention concerne la prévention des risques de bouchage dans les canalisations de transport d'un fluide et, en particulier, de fluides polyphasiques pétroliers.

Il est connu que de tels fluides polyphasiques pétroliers peuvent entraîner la formation d'une phase solide, telle que des hydrates, paraffines, asphaltènes ou autres dépôts minéraux. Cette phase solide peut se déposer en un ou plusieurs points de la canalisation et en réduire alors le débit jusqu'à perturber totalement le transport de l'hydrocarbure.

Or, le contexte économique actuel incite les sociétés opératrices à réduire sensiblement leurs investissements et leurs coûts d'exploitation, en particulier, par une meilleure maîtrise et la recherche de l'élimination des risques de dépôt de cette phase solide, aussi bien dans les installations de traitement que dans celles de transport des hydrocarbures.

### TECHNIQUE ANTERIEURE :

Pour tenter de remédier au problème de dépôt de cette phase solide à l'intérieur d'une canalisation transportant des hydrocarbures, il est prévu d'avoir recours à des solutions préventives dont l'une consiste à ajouter plus ou moins systématiquement, des additifs inhibiteurs adaptés au transport de tels hydrocarbures. Une autre solution consiste à procéder régulièrement, à titre conservatoire, à des opérations de raclage à l'intérieur des canalisations. De telles solutions, qui sont souvent combinées, sont onéreuses et ne sont pas totalement satisfaisantes, notamment à cause de la difficulté de leur planification. Il subsiste ainsi, en cas de mauvaise planification des opérations de raclage et/ou de rajout d'agents inhibiteurs, des problèmes liés :
- à la perte de production par bouchage des canalisations,
- à la sécurité, avec les risques d'accidents liés à l'apparition d'un bouchon d'hydrates, au défaut de fonctionnement de vannes ou au redémarrage d'unités bloquées par la gélification de bruts paraffiniques,
- et à la perte de marchés commerciaux à cause du non respect de conditions contractuelles de vente pour cause d'arrêt de production.

De telles solutions préventives sont d'autant plus onéreuses qu'en l'absence de données réelles sur la quantité de dépôt s'étant formé à l'intérieur de la canalisation, il est procédé à des opérations de raclage à des intervalles très rapprochés et/ou à un ajout d'additifs inhibiteurs en plus grande quantité que nécessaire. Pour tenter de remédier à ces inconvénients, des études sont menées, en vue d'améliorer les connaissances sur les conditions de formation des phases solides (hydrates, paraffines et asphaltènes) au sein d'un écoulement polyphasique. Ces études visent le développement de modèles destinés à prédire les profils de dépôt le long d'une canalisation, ou encore, l'amélioration des additifs inhibiteurs adaptés au transport des bruts "difficiles".

Un autre type de solution actuellement peu développé, concerne une technique visant à mesurer la quantité du dépôt formé à l'intérieur d'une canalisation. Pour tenter d'accéder à la mesure réelle de la quantité d'un dépôt susceptible de s'être formé à l'intérieur de la canalisation, il a été ainsi envisagé d'installer ou d'amener à l'intérieur de la canalisation, un équipement de mesure et de contrôle interne. Toutefois, une telle solution est à même de perturber l'écoulement, de ne pas permettre une mesure en continu et de ne pas constituer une mesure fiable. Dans le même sens, il a été proposé de mesurer la quantité de dépôt à l'aide de capteurs ultrasonores. Toutefois, il apparaît que les impédances acoustiques d'un dépôt et des hydrocarbures transportés sont sensiblement identiques, de sorte qu'une telle technique est peu fiable.

Dans l'état technique, il est aussi connu de mettre en oeuvre des techniques non invasives pour déterminer les caractéristiques d'un fluide circulant à l'intérieur d'une canalisation. Ainsi par exemple, le brevet US 5 836 693 décrit un dispositif comportant une source de production de chaleur montée sur la canalisation et une double de série de capteurs de mesure de température montés de part et d'autre de la source de production de chaleur, selon la circonférence de la canalisation. La source de production de chaleur et les capteurs de mesure sont reliés à une unité de contrôle permettant de mesurer la température de la surface de canalisation de part et d'autre de la source de production de chaleur de manière à déterminer par exemple la nature du fluide, à savoir liquide ou gazeux, le sens de circulation du fluide, le caractère dynamique ou statique du fluide, etc.

Par ailleurs la demande de brevet DE 4335332 décrit un procédé consistant à placer une source de production de chaleur sur la canalisation ainsi qu'une série de capteurs de température montés selon la longueur de canalisation afin de déterminer le profil de température le long de la canalisation. Un tel procédé permet ainsi de déterminer les caractéristiques du fluide tel que sa viscosité, sa pureté, son état gazeux mais également l'état de corrosion de la canalisation et la présence éventuelle d'incrustations dans la canalisation.

Il apparaît donc le besoin de pouvoir disposer d'une technique permettant, en des points choisis de la canalisation, de détecter un dépôt ou de mesurer l'épaisseur d'un tel dépôt susceptible d'être présent à l'intérieur d'une canalisation de transport de fluides, qu'ils soient liquides et/ou gazeux, cette technique ne perturbant pas l'écoulement et n'étant pas intrusive tout en étant simple et efficace.

### EXPOSE DE L'INVENTION :

Pour atteindre un tel objectif, l'objet de l'invention concerne un procédé pour détecter un dépôt de paraffine **(D)** susceptible de se former à l'intérieur d'une canalisation **(2)** de transport d'un fluide pétrolier, selon lequel :
- on applique un gradient thermique **(G)** en au moins une zone dite active **(Za)** de la surface extérieure de la canalisation,
- on mesure sur la surface extérieure de la canalisation **(2),** en au moins une zone **(Zm)** située à une distance donnée de la zone active en considération de la longueur de la canalisation, un flux thermique transmis par la structure même de la canalisation **(2)** après l'application du gradient thermique,
- on détermine la présence du dépôt de paraffine **(D)** à partir du flux thermique en tenant compte du fait que le flux thermique est transmis par la canalisation sous l'effet du caractère d'isolant thermique du dépôt de paraffine et que le flux thermique dépasse un seuil déterminé significatif de la présence d'un dépôt de paraffine à l'intérieur de la canalisation.

Selon une variante avantageuse de réalisation, l'objet de l'invention vise également à déterminer la valeur de l'épaisseur du dépôt en comparant le niveau du flux thermique mesuré et le niveau du flux thermique relevé lors d'une phase d'étalonnage.

Diverses autres caractéristiques ressortent de la description faite ci-dessous en référence aux dessins annexés qui montrent, à titre d'exemples non limitatifs, des formes de réalisation et de mise en oeuvre de l'objet de l'invention.

### BREVE DESCRIPTION DES DESSINS :

La **fig. 1** est une vue schématique montrant un exemple de réalisation d'une installation de détection conforme à l'invention.

La **fig. 2** est une courbe illustrant le gradient thermique appliqué en fonction du temps.

La **fig. 3** est une courbe illustrant, en fonction du temps, le signal du flux thermique mesuré, en présence et en l'absence d'un dépôt à l'intérieur de la canalisation.

### MEILLEURE MANIERE DE REALISER L'INVENTION:

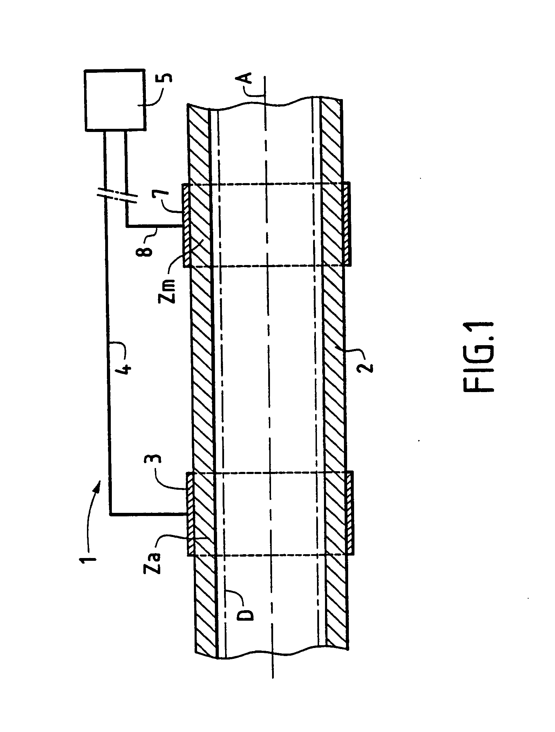

Tel que cela ressort plus précisément de la fig. 1, l'installation 1 selon l'invention est adaptée pour détecter un dépôt de paraffine susceptible de se former à l'intérieur d'une canalisation **2** de transport d'un fluide pétrolier. D'une manière classique, le transport de fluides polyphasiques pétroliers entraîne le risque de formation à l'intérieur de la canalisation, d'un dépôt ou d'une phase solide représentée schématiquement par la référence **D**, telle que des paraffines.

Conformément à l'invention, l'installation **1** comporte au moins une source **3** de production d'un gradient thermique **G**. Une telle source de production **3** est destinée à être montée sur une zone dite active **Za**, de la surface extérieure de la canalisation **2.** Il doit être considéré que cette source **2** , apporte une quantité déterminée de chaleur (positive ou négative) sur une zone choisie de la canalisation ***2,*** par tous moyens appropriés. A titre d'exemple, la quantité de chaleur apportée à la canalisation ***2*** peut être produite par effet Joule, effet Pelletier ou effet Seebeck. Selon un exemple de réalisation, cette source de production d'un gradient thermique ***G*** peut être constituée sous la forme d'un bandeau souple intégrant les moyens techniques pour l'application du gradient thermique. Un tel bandeau peut être soit rapporté sur la canalisation **2** en dessous du revêtement d'isolation thermique ou coating enveloppant généralement les canalisations de transport de produits pétroliers, soit être directement intégré sur la canalisation au cours de son processus de fabrication.

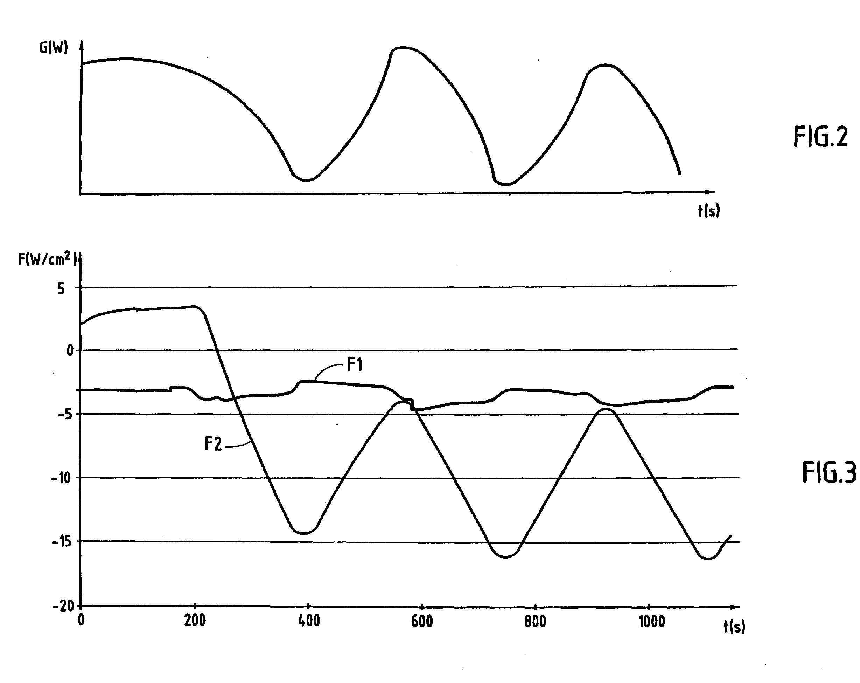

La source de production **3** est reliée par une liaison **4** à des moyens de contrôle et de traitement **5,** adaptés pour contrôler la quantité de chaleur appliquée et le temps de son application. Selon un exemple de réalisation illustré plus particulièrement à la **fig. 2****,** le gradient de température **G** est appliqué selon un cycle déterminé régulier ou non, comportant des périodes d'application du gradient thermique entrecoupées de périodes d'application d'un gradient thermique de signe opposé ou nulle.

Par ailleurs, il doit être considéré que le gradient thermique **G** est appliqué sur une zone active **Za** plus ou moins large de la canalisation **2** en considération de la longueur de cette canalisation. Dans le même sens, cette zone active **Za** peut constituer toute la circonférence de la canalisation ***2*.** Bien entendu, il pourrait être envisagé, notamment, pour des canalisations de grand diamètre, d'appliquer le gradient thermique sur plusieurs secteurs angulaires déterminés d'une circonférence de la canalisation.

L'installation **1** selon l'invention comporte également au moins un capteur **7** de mesure du flux thermique F, destiné à être monté sur une zone **Zm** de la surface extérieure de la canalisation **2,** située à une distance donnée de la zone active **Za** en considération de la longueur de la canalisation **2.** Cette zone de mesure **Zm** du flux thermique se trouve donc située à une distance déterminée de la zone active **Za** en considération de l'axe longitudinal **A** d'une telle canalisation **2.** En d'autres termes, la source de production **3** et le capteur de mesure **7** sont situés selon deux sections droites transversales différentes de la canalisation **2.** Il est à noter que le capteur de mesure **7** peut être monté en amont ou en aval de la source de production **3,** en considération du sens de circulation du fluide à l'intérieur de la canalisation **2.**

Le capteur de mesure **7** du flux thermique est monté pour accéder à l'échange thermique (i.e. en W/cm²), entre la canalisation **2** et le fluide circulant à l'intérieur de la canalisation. Il est à noter que ce capteur de mesure **7** est adapté pour être thermiquement transparent, dans la mesure où les problèmes de dépôt sont intimement liés à la valeur de la température mesurée à la périphérie de la canalisation **2**. En d'autres termes, ce capteur de mesure **7** est conçu pour ne pas modifier localement le profil thermique à l'extérieur de la canalisation **2**. Par ailleurs, compte tenu du fait que les canalisations **2** de transport de brut pétrolier sont généralement isolées thermiquement par l'intermédiaire d'un revêtement ou coating, un tel capteur de mesure **7** est installé sous un tel revêtement, afin de ne pas modifier l'environnement thermique de cette canalisation.

Selon un exemple de réalisation, un tel capteur de mesure **7** du flux thermique est constitué par un bandeau souple, tel qu'une bande en Néoprène sur laquelle sont fixés un ou plusieurs fluxmètres montés pour être répartis sur la circonférence de la canalisation. Dans le cas du montage d'un fluxmètre pour un secteur donné de la canalisation, il peut être envisagé d'accéder à l'échange thermique entre le fluide transporté et ladite zone de la canalisation. Un tel bandeau peut être soit rapporté sur la canalisation **2** en dessous du revêtement d'isolation thermique, soit être directement intégré sur la canalisation au cours de son processus de fabrication. Un tel capteur de mesure **7** peut intégrer également une sonde de température de la surface extérieure de la canalisation **2**.

Le capteur de mesure **7** est relié aux moyens de contrôle et de traitement **5** par l'intermédiaire d'une liaison **8** de tout type. Les moyens de contrôle et de traitement **5** sont adaptés pour, en fonction du gradient thermique appliqué et de la mesure du flux thermique, déterminer la présence d'un dépôt D de paraffine à l'intérieur de la canalisation **2**, selon le procédé décrit ci-après.

La mise en oeuvre de l'installation 1 décrite ci-dessus est effectuée de la manière suivante.

Les moyens de contrôle et de traitement **5** permettent d'appliquer par l'intermédiaire de la source **3,** un gradient thermique **G** sur la zone active **Za** de la canalisation **2.** Le gradient thermique **G** appliqué est contrôlé aussi bien en puissance que temporellement, de manière à être identifiable par rapport aux éventuelles variations thermiques dues à l'environnement extérieur de la canalisation ou au fluide transporté. Le gradient thermique appliqué tient compte, notamment, de la distance séparant la source de production **3** et le capteur de mesure **7.** Par exemple, le gradient thermique est appliqué de manière cyclique. Un exemple d'une forme du gradient thermique **G** appliqué est donné par la **fig. 2****.**

Au moins après l'application du gradient thermique **G,** les moyens de contrôle et de traitement **5** assurent par l'intermédiaire du capteur **7,** la mesure du flux thermique d'une zone **Zm** de la surface extérieure située à distance de la zone active **Za.** En l'absence d'un dépôt **D** de paraffine à l'intérieur de la canalisation **2,** le gradient thermique injecté est presque intégralement transmis au fluide en déplacement dans la conduite **2.** Compte tenu de la distance entre le capteur de mesure **7** et la source de production **3** du gradient thermique, le flux thermique détecté au niveau de la zone de mesure **Zm,** n'est pratiquement plus mesurable. Un exemple d'un signal de flux thermique **F₁** pour une canalisation **2** ne comportant pas de dépôt est représenté à la **fig. 3**.

En présence d'un dépôt **D** de paraffine à l'intérieur de la canalisation 2, ce dépôt provoque une isolation thermique entre la canalisation **2** et le fluide transporté. Le gradient thermique injecté au niveau de la zone active **Za** n'est pas transmis dans le fluide mais se transmet principalement dans la structure même de la canalisation **2.** Le flux thermique est ainsi transmis jusqu'à la zone de mesure **Zm** du capteur de mesure **7.** Un exemple du signal F₂ du flux thermique mesuré lors de la présence d'un dépôt **D** de paraffine à l'intérieur de la canalisation est donné à la **fig. 3****.** Ce gradient thermique mesuré correspond, au moins partiellement, à celui appliqué et transmis par la canalisation **2.**

La valeur du flux thermique mesuré est comparée à une valeur de seuil déterminée significative de la présence d'un dépôt **D** de paraffine à l'intérieur de la canalisation **2.** Si la valeur mesurée du flux thermique atteint ou dépasse cette valeur de seuil, les moyens de contrôle et de traitement **5** indiquent la présence d'un tel dépôt par tous moyens appropriés, comme par exemple sous la forme d'un graphique, d'un signal sonore et/ou lumineux, d'un message, etc.

Le procédé selon l'invention vise ainsi à appliquer un gradient thermique sur au moins une zone de la surface extérieure de la canalisation et à mesurer au moins après l'application de ce gradient thermique, le flux thermique à une distance donnée de la zone d'application, de manière à déterminer si la chaleur est diffusée dans le fluide (absence de dépôt), ou transmise par la canalisation (présence de dépôt qui agit comme un isolant thermique). Il existe ainsi, lors de la présence d'un dépôt **D** de paraffine, une corrélation entre l'application d'un gradient thermique et l'apparition d'un flux thermique à une distance donnée du point d'application. Il est à noter que la mise en oeuvre d'une série de fluxmètres affectés chacun à un secteur de la circonférence de la canalisation, permet d'obtenir des mesures qui tiennent compte des différents régimes d'écoulement susceptibles d'intervenir pour un fluide comportant une phase liquide et une phase gazeuse. De plus, l'utilisation de plusieurs fluxmètres répartis permet de détecter la présence d'un dépôt pour chaque zone de mesure affectée à un fluxmètre.

Selon une caractéristique avantageuse de réalisation, l'objet de l'invention permet également de déterminer la valeur de l'épaisseur d'un tel dépôt **D** de paraffine en comparant le niveau du flux thermique mesuré et le niveau du flux thermique relevé lors d'une phase d'étalonnage. Selon un exemple de réalisation, il peut être envisagé de détecter les valeurs crêtes du flux thermique mesuré, de manière que la valeur crête à crête du signal soit comparée à la valeur de seuil significative de la présence d'un dépôt de paraffine à l'intérieur de la canalisation.

### POSSIBILITE D'APPLICATION INDUSTRIELLE :

L'objet de l'invention permet de détecter la présence un dépôt de paraffine à l'intérieur d'une canalisation, ainsi que de mesurer l'épaisseur d'un tel dépôt. Une telle détection ou mesure peut être effectuée facilement par le montage, de façon intégrée ou rapportée, du capteur de mesure **7** et de la source de production sur une canalisation de divers types flexibles ou rigides. Un tel montage peut intéresser des canalisations de transport de fluide pétrolier, notamment sous-marines, placées à de grandes profondeurs. Bien entendu, les moyens de contrôle et de traitement **5** peuvent être facilement déportés par rapport à la canalisation **2** à l'aide des liaisons **4, 8.** Par ailleurs, une telle installation peut être combinée à une autre technique de mesure de la quantité d'un dépôt, par exemple vibratoire, telle qu'explicitée dans la demande de brevet FR 2 754 898**.**

L'invention n'est pas limitée aux exemples décrits et représentés, car diverses modifications peuvent y être apportées sans sortir de son cadre.

## Revendications

1. Procédé pour détecter un dépôt de paraffine **(D)** susceptible de se former à l'intérieur d'une canalisation **(2)** de transport d'un fluide pétrolier, selon lequel :
- on applique un gradient thermique **(G)** en au moins une zone dite active **(Za)** de la surface extérieure de la canalisation,
- on mesure sur la surface extérieure de la canalisation **(2),** en au moins une zone **(Zm)** située à une distance donnée de la zone active en considération de la longueur de la canalisation, un flux thermique transmis par la structure même de la canalisation **(2)** après l'application du gradient thermique,
- on détermine la présence du dépôt de paraffine **(D)** à partir du flux thermique en tenant compte du fait que le flux thermique est transmis par la canalisation sous l'effet du caractère d'isolant thermique du dépôt de paraffine et que le flux thermique dépasse un seuil déterminé significatif de la présence d'un dépôt de paraffine à l'intérieur de la canalisation.

2. Procédé selon la revendication 1, **caractérisé en ce qu'**il consiste à appliquer un gradient thermique **(G)** selon un cycle déterminé.

3. Procédé selon la revendication 1 ou 2, **caractérisé en ce qu'**il consiste à appliquer un gradient thermique **(G)** en une zone active **(Za)** constituant une circonférence de la canalisation.

4. Procédé selon la revendication 1, **caractérisé en ce qu'**il consiste à mesurer le flux thermique **(F)** en un ou plusieurs secteurs d'une circonférence de la canalisation.

5. Procédé selon la revendication 1, **caractérisé en ce qu'**il consiste à déterminer la valeur de l'épaisseur du dépôt **(D)** en comparant le niveau du flux thermique mesuré et le niveau du flux thermique relevé lors d'une phase d'étalonnage.

## Claims

1. A method for detecting a paraffin deposit (D) which may be formed inside a channel (2) for transporting a petroleum fluid, according to which:
- a thermal gradient (G) is applied in at least one so-called active zone (Za) of the outer surface of the channel,
- after the application of the thermal gradient, a thermal flow transmitted by the channel (2) structure itself is measured on the outer surface of the channel (2), in at least one zone (Zm) situated at a given distance from the active zone taking account of the length of the channel,
- the presence of the paraffin deposit (D) is determined from the thermal flow by taking into consideration the fact that the thermal flow is transmitted by the channel under the effect of the thermally insulating character of the paraffin deposit and that the thermal flow exceeds a determined threshold signifying the presence of a paraffin deposit inside the channel.

2. The method according to Claim 1, **characterised in that** it consists in applying a thermal gradient (G) according to a determined cycle.

3. The method according to Claim 1 or 2, **characterised in that** it consists in applying a thermal gradient (G) in an active zone (Za) constituting a circumference of the channel.

4. The method according to Claim 1, **characterised in that** it consists in measuring the thermal flow (F) in one or more sectors of a circumference of the channel.

5. The method according to Claim 1, **characterised in that** it consists in determining the value of the thickness of the deposit (D) by comparing the measured thermal flow level and the thermal flow level recorded during a calibration phase.

## Patentansprüche

1. Verfahren zum Erfassen einer Paraffinablagerung (D), die sich im Inneren einer Rohrleitung (2) für den Transport eines Mineralöls bilden kann, gemäß dem:
- in mindestens einer sogenannten aktiven Zone (Za) der Außenfläche der Rohrleitung ein Temperaturgradient (G) angelegt wird,
- an der Außenfläche der Rohrleitung (2) in mindestens einer Zone (Zm), die sich in einer in Anbetracht der Länge der Rohrleitung vorgegebenen Entfernung von der aktiven Zone befindet, ein Wärmestrom gemessen wird, der durch die Struktur selbst der Rohrleitung (2) nach dem Anlegen des Temperaturgradienten übertragen wird,
- das Vorhandensein der Paraffinablagerung (D) anhand des Wärmestroms unter Berücksichtigung der Tatsache bestimmt wird, dass der Wärmestrom durch die Rohrleitung unter der Wirkung des wärmeisolierenden Charakters der Paraffinablagerung übertragen wird und dass der Wärmestrom eine Schwelle überschreitet, die so festgelegt ist, dass sie Aufschluss über das Vorhandensein einer Paraffinablagerung im Inneren der Rohrleitung gibt.

2. Verfahren nach Anspruch 1, **dadurch gekennzeichnet, dass** es umfasst, einen Temperaturgradienten (G) gemäß einem bestimmten Zyklus anzulegen.

3. Verfahren nach Anspruch 1 oder 2, **dadurch gekennzeichnet, dass** es umfasst, einen Temperaturgradienten (G) in einer aktiven Zone (Za) anzulegen, die einen Umfang der Rohrleitung darstellt.

4. Verfahren nach Anspruch 1, **dadurch gekennzeichnet, dass** es umfasst, den Wärmestrom (F) in einem oder mehreren Sektoren eines Umfangs der Rohrleitung zu messen.

5. Verfahren nach Anspruch 1, **dadurch gekennzeichnet, dass** es umfasst, den Wert der Dicke der Ablagerung (D) durch Vergleichen des Niveaus des gemessenen Wärmestroms mit dem Niveau des während einer Kalibrierungsphase festgestellten Wärmestroms zu bestimmen.
